Europäisches Patentamt

European Patent Office

Office européen des brevets

(11) Veröffentlichungsnummer: **0 312 737 B1**

(19)

(12) **EUROPÄISCHE PATENTSCHRIFT**

(45) Veröffentlichungstag der Patentschrift: **17.06.92**

(21) Anmeldenummer: **88113822.6**

(22) Anmeldetag: **25.08.88**

(51) Int. Cl.⁵: **F16K 31/02**, F16K 11/00,
H01L 35/00

(54) **Elektrisch gesteuerte Armatur.**

(30) Priorität: **22.09.87 CH 3658/87**

(43) Veröffentlichungstag der Anmeldung:
**26.04.89 Patentblatt 89/17**

(45) Bekanntmachung des Hinweises auf die
Patenterteilung:
**17.06.92 Patentblatt 92/25**

(84) Benannte Vertragsstaaten:
**AT BE CH DE FR GB IT LI SE**

(56) Entgegenhaltungen:
**EP-A- 0 158 930**
**EP-A- 0 193 702**
**WO-A-85/01337**

(73) Patentinhaber: **KWC AG**
**Hauptstrasse 130**
**CH-5726 Unterkulm(CH)**

(72) Erfinder: **Blättler, Ernst**
**Stehlistrasse 3**
**CH-8912 Obfelden(CH)**

(74) Vertreter: **Patentanwälte Schaad, Balass &
Partner**
**Dufourstrasse 101 Postfach**
**CH-8034 Zürich(CH)**

Rank Xerox (UK) Business Services

EP 0 312 737 B1

**Beschreibung**

Die vorliegende Erfindung betrifft eine elektrisch gesteuerte Armatur für Kalt- und Warmwasser gemäss dem Oberbegriff des Anspruchs 1.

Eine solche Armatur ist aus der EP-A 0 158 930 bekannt. Sie weist zwei in einem gemeinsamen Gehäuse angeordnete Leitungsorgane für Kalt- und Warmwasser auf, in deren gemeinsamer Trennwand eine Peltier-Anordnung als Stromquelle für die Steuerung der Armatur angeordnet ist. Bei Nichtgebrauch der Armatur kühlt sich das Warmwasser relativ rasch auf Umgebungstemperatur ab, und die Peltier-Anordnung kann daher für das erneute Oeffnen der Ventile keinen Strom mehr liefern. Um dieses Problem zu überwinden, wird vorgeschlagen, bei Wiederinbetriebnahme der Armatur zunächst das Wasser ungehindert durchströmen zu lassen, bis wieder eine genügend hohe Temperatur erreicht ist, und die Peltier-Anordnung Strom für die Betätigung der Ventile liefern kann. Solche Armaturen dürften sich wohl in Installationen mit geschlossenen Wasserkrsisläufen, wie zum Beispiel Warmwasserheizungen, eignen. Bei sanitarischen Armaturen, wie beispielsweise Wasserspendern oder Mischventilen, müsste der bekannten Armatur wohl ein von Hand betätigbarer Hahn vor- oder nachgeschaltet sein, um die Wiederinbetriebnahme sicher zu stellen.

Es ist daher Aufgabe der vorliegenden Erfindung, die Armatur gemäss dem Oberbegriff des Anspruchs 1 dahingehend weiterzubilden, dass auch nach längerer Unterbrechung auf einfache Weise die Wiederinbetriebnahme sichergestellt ist.

Diese Aufgabe wird durch die Merkmale des kennzeichnenden Teils des Anspruchs 1 gelöst.

Dadurch, dass im Bereich der thermischen Kopplung zwischen dem Kalt- bzw. Warmwasser und der Peltier-Anordnung je ein Wärmeübertragungselement vorgesehen ist, wird eine erhebliche Wassermenge gespeichert, und die Masse des vom Warmwasser durchflossenen Wärmeübertragungselementes aufgeheizt, was zu einer langsamen Abkühlung nach erfolgter Abschaltung der Armatur führt. Da die Leitungsorgane für das Kalt- und Warmwasser als zwei separate, voneinander getrennte Baugruppen ausgebildet sind, wird erreicht, dass die Wärmeübertragungselemente thermisch gegeneinander isoliert sind und keine Abkühlung des vom Warmwasser durchflossenen Wärmeübertragungselementes durch Wärmeleitung ausserhalb der Berührungsfläche mit der Peltier-Anordnung erfolgen kann. Diese Massnahmen führen dazu, dass die erhöhte Temperatur auf der warmen Seite der Peltier-Anordnung über längere Zeit erhalten bleibt, und diese somit über längere Zeit Strom für die Steuerung der Armatur liefern kann. Die sandwichartige Umfassung der Peltier-Anordnung ist besonders platzsparend und einfach.

Desweitern kann das vom Warmwasser durchflossene Wärmeübertragungselement zur Vergrösserung der Wärmespeicherkapazität eine grössere Masse aufweisen. Dies verzögert die Abkühlung erheblich.

In einer bevorzugten Ausführungsform weist die Steuerung der Armatur ein elektrisches Speicherelement, vorzugsweise einen Akkumulator oder einen Kondensator, auf, das mittels der Peltier-Anordnung aufladbar ist. Durch die lanosame Abkühlung des vom warmen Wasser durchflossenen Wärmeübertragungselements, kann das Speicherelement maximal aufgeladen werden. Ueberdies kann die Aufladung in Folge der langen Aufladezeit mit kleinen Strömen erfolgen, was die Lebensdauer der Speicherelemente, insbesondere der Akkumulatoren, vergrössert.

Weitere bevorzugte Ausführungsformen des Erfindungsgegenstandes sind in den weiteren abhängigen Ansprüchen angegeben.

Anhand der Zeichnung wird nun ein Beispiel des Erfindungsgegenstandes näher erläutert. Es zeigen rein schematisch:

Fig. 1    in Ansicht einen teilweise geschnitten dargestellten Wasserspender, und

Fig. 2    in Seitenansicht denselben, ebenfalls teilweise geschnitten dargestellten Wasserspender.

An einem Armaturkörper 10 eines Wasserspenders 12 ist ein Befestigungsflansch 14 mit einem Gewinde 16 ausgebildet. Der Befestigungsflansch 14 durchdringt ein Durchgangsloch 18 in einer Platte 20, beispielsweise eines Lavabos, und ist mittels einer Mutter 22 an dieser festgeschraubt. Zwischen der Platte 20 und der Mutter 22 befindet sich eine Unterlagsscheibe 24. Der Armaturkörper 10 ist oberhalb dem Befestigungsflansch 14 hohl ausgebildet und von einer U-förmigen Haube 26 überdeckt. Mittels einer Schraube 28 kann die Temperatur des aus dem Wasserspender 12 fliessenden Mischwassers vorgewählt werden.

Im Innern des Armaturkörpers 12 sind zwei Wärmeübertragungselemente 30, 32 angeordnet, die je mit einer, den Befestigungsflansch 14 durchdringenden Armaturanschlussleitung 34, 36 strömungsmässig verbunden sind. Ausserhalb des Armaturkörpers 10 sind die Armaturanschlussleitungen 34, 36 in nicht dargestellter, aber allgemein bekannter Weise mit einer Warmwasser- und einer Kaltwasserspeiseleitung verbunden. Das Leitungsorgan (34,30,38) wird vom Warmasser 30a und das Leitungsorgan (36,32,40) vom Kaltwasser 32a durchflossen.

Die Wärmeübertragungselemente 30 und 32 sind quaderförmige Hohlkörper, die mit ihren grössten Seitenflächen 56. 58 parallel zueinander angeordnet sind. Jedes Warmeübertragungselement 30, 32 ist mittels einem Rohrabschnitt 38, 40 je mit einem Einlass 42, 44 eines elektrisch betätigten Ventiles 46, 48 verbunden. Auslasseitig stehen die Ventile 46, 48 mittels weiteren Rohrabschnitten 50, 52 mit einem Düsenkörper 54 in Strömungsverbindung.

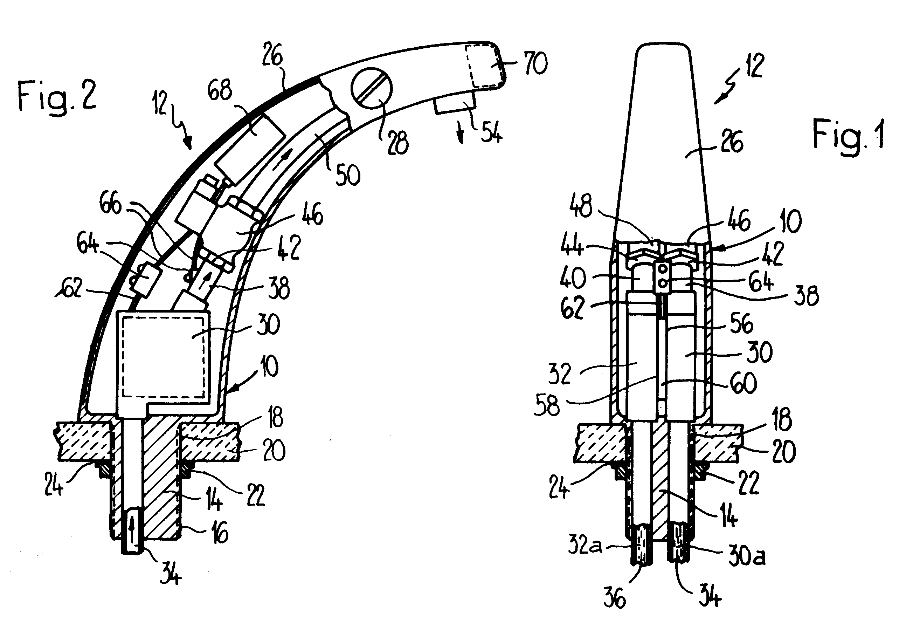

Wie dies besonders aus der Fig. 1 ersichtlich ist, ist zwischen den benachbarten Seitenflächen 56, 58 der Wärmeübertragungselemente 30, 32 eine Peltier-Anordnung 60 angeordnet, deren gegenüberliegenden grossen Aussenflächen die Seitenflächen 56 und 58 berühren. Wie dies allgemein bekannt ist, besteht die Peltier-Anordnung 60 aus mehreren elektrisch hintereinander und thermisch parallel geschalteten Peltier-Elementen. Die warme Seite der Peltier-Anordnung 60 steht mit der Seitenfläche 56 des Wärmeübertragungselementes 30 in guter thermischer Verbindung, während die kalte Seite mit der Seitenfläche 58 des anderen Wärmeübertragungselementes 32 in guter thermischer Verbindung steht. Die Anschlussleitungen 62 der Peltier-Anordnung 60 sind mittels Klemmen 64 mit weiteren Anschlussleitungen 66 elektrisch verbunden, die zu einer nur schematisch dargestellten elektronischen Steuerung 68 führen. Die elektronische Steuerung 68 ist mittels nicht dargestellten Steuerleitungen mit den beiden Ventilen 46, 48 und mit einem am Kopfende des Wasserspenders 12 angeordneten Näherungssensor 70 elektrisch verbunden.

Für das Verständnis der Erfindung ist eine nähere Umschreibung der elektronischen Steuerung 68 nicht notwendig. In ihr ist aber vorzugsweise ein Akkumulator oder ein Kondensator angeordnet, der mittels dem von der Peltier-Anordnung 60 gelieferten Strom aufgeladen werden kann, wie dies weiter unten noch zu beschreiben ist.

Der Wasserspender 12 funktioniert wie folgt: Sobald die zu waschenden Hände in den Bereich des Näherungssensors 70 gelangen, gibt dieser ein elektrisches Signal an die elektronische Steuerung 68 ab. Diese wertet das Signal aus, verstärkt es und gibt einen Oeffnungsbefehl an die Ventile 46 und 48 ab, wodurch das Kalt- und Warmwasser 32a, 30a je in Pfeilrichtung durch die Wärmeübertragungselemente 30, 32, die Rohrabschnitte 38, 40, die Ventile 46, 48 und die weiteren Rohrabschnitte 50, 52 zum Düsenkörper 54 fliesst. Im Düsenkörper 54 wird das Warm- und Kaltwasser 30a, 32a gemischt, wonach das Mischwasser dort den Wasserspender 12 verlässt und auf die zu waschenden Hände fliesst. Das vom Warmwasser 30a durchflossene Wärmeübertragungselement 30 wärmt sich sehr schnell auf, und das vom Kaltwasser 32a durchflossene Wärmeübertragungselement 32 passt seine Temperatur der Kaltwassertemperatur an, so dass die Peltier-Anordnung 60 einem relativ grossen Temperaturunterschied ausgesetzt ist. Dies führt zu einer elektrischen Spannung, die einen Stromfluss durch die Anschlussleitung 62, 66 zur elektronischen Steuerung 68 und zurück verursacht. Mittels diesem Strom wird der in der elektronischen Steuerung 68 angeordnete Akkumulator oder Kondensator aufgeladen, mit dessen Energie die Ventile 46, 48 und die gesamte Elektronik gespeist werden.

Sobald sich die Hände aus dem Bereich des Näherungssensors 70 entfernen, gibt dieser wiederum ein Signal an die elektronische Steuerung 68 ab, welche mittels weiteren Befehlen das Schliessen der Ventile 46, 48 steuert. Um die Aufladezeit des Akkumulators oder Kondensators zu verlängern, kann die Masse des vom Warmwasser 30a durchflossenen Wärmeübertragungselementes 30 vergrössert werden. Eine Temperaturdifferenz zwischen den beiden Wärmeübertragungselementen 30 und 32 dauert somit länger an.

Weitere Armaturen, die erfindungsgemäss ausgebildet sein können, sind beispielsweise Armaturen mit elektrischen oder elektronischen Anzeigen sowie optischen oder akustischen Warneinrichtungen für die Temperatur, den Druck, die Durchflussmenge usw. des fliessfähigen Mediums.

## Patentansprüche

1. Elektrisch gesteuerte Armatur für Kalt- und Warmwasser mit:
   - einem Leitungsorgan (36,32,40) für das Kaltwasser (32a) und einem Leitungsorgan (34,30,38) für das Warmwasser (30a);
   - einer Stromquelle bestehend aus einer zwischen diesen Leitungsorganen angeordneten Peltier-Anordnung (60), deren eine Seite mit dem Leitungsorgan (34,30,38) für das Warmwasser (30a) und deren andere Seite mit dem Leitungsorgan (36,32,40) für das Kaltwasser (32a) thermisch gekoppelt ist und
   - einer der Peltier-Anordnung (60) in Strömungsrichtung gesehen nachgelagerten Ventilanordnung (46,48) zum Steuern des Wasserflusses durch die Armatur;

   wobei im Bereich der Peltier-Anordnung (60) die Strömungsquerschnitte der Leitungsorgane (36,32,40;34,30, 38) erheblich grösser sind als in den übrigen Bereichen, dadurch gekennzeichnet, dass die Leitungsorgane (36,32,40;34,30,38) durch zwei separate, voneinander mindestens bis zur Ventilanordnung (46, 48) getrennte Baugruppen gebildet werden, die im Bereich der Peltier-Anordnung (60) als, diese sandwichartig umfassende, Wärmeübertragungselemente (32;30) ausgebildet sind.

2. Armatur nach Anspruch 1, dadurch gekennzeichnet, dass die Wärmeübertragungselemente (30,32) quaderförmig ausgebildet sind.

3. Armatur nach Anspruch 1 oder 2, dadurch gekennzeichnet, dass das vom Warmwasser (30a) durchflossene Wärmeübertragungselement (30) zur Vergrösserung der Wärmespeicherkapazität eine grössere Masse als das vom Kaltwasser (32a) durchflossene Wärmeübertragungselement (32) aufweist.

4. Armatur nach einem der Ansprüche, 1 bis 3, dadurch gekennzeichnet, dass die Steuerung (68) der Armatur ein elektrisches Speicherelement, vorzugsweise einen Akkumulator oder einen Kondensator, aufweist, das mittels der Peltier-Anordnung (60) aufladbar ist.

5. Armatur nach einem der Ansprüche 1 bis 4, dadurch gekennzeichnet, dass sie ein Wasserspender (12) mit elektrisch betätigten Ventilen (46,48) für das Warm-und Kaltwasser (30a,32a) ist.

6. Armatur nach Anspruch 5, dadurch gekennzeichnet, dass ein mit der Steuerung (68) verbundener Näherungssensor (70) vorgesehen ist.

## Claims

1. An electrically controlled fitting for cold and hot water, with:
   - a piping means (36, 32, 40) for the cold water (32a) and a piping means (34, 30, 38) for the hot water (30a);
   - a power source consisting of, disposed between these piping means, a Peltier arrangement (60), one side of which is connected thermally to the piping means (34, 30, 38) for the hot water (30a) while its other side is connected to the piping means (36, 32, 40) for the cold water (32a), and
   - downstream of the Peltier arrangement (60), viewed in the direction of flow, a valve arrangement (46, 48) for controlling the water flow through the fitting;
   
   wherein, in the region of the Peltier arrangement (60) the flow cross-sections of the piping means (36, 32, 40; 34, 30, 38) are considerably larger than in the other regions, characterised in that the piping means (36, 32, 40; 34, 30, 38) are constituted by two separate sub-assemblies separated from each other at least as far as the valve arrangement (46, 48) and which in the region of the Peltier arrangement (60) are constructed as heat transmitting elements (32, 30) which engage sandwich-like around the Peltier arrangement (60).

2. A fitting according to claim 1, characterised in that the heat transmitting elements (30, 32) are of parallelepiped construction.

3. A fitting according to claim 1 or 2, characterised in that to increase the heat storage capacity, the heat transmitting element (30) through which the hot water (30a) flows has a greater mass than the heat transmitting element (32) through which the cold water (32a) passes.

4. A fitting according to one of claims 1 to 3, characterised in that the means (68) for controlling the fitting comprises an electrical storage element, preferably an accumulator or a capacitor which can be charged by the Peltier arrangement (60).

5. A fitting according to one of claims 1 to 4, characterised in that it is a water dispenser (12) with electrically actuated valves (46, 48) for the hot and cold water (30a, 32a).

6. A fitting according to claim 5, characterised in that a proximity sensor (70) is provided which is connected to the control means (68).

## Revendications

1. Appareil de robinetterie pour eau froide et eau chaude à commande électrique, avec:
   - un élément de conduite (36,32,40) pour l'eau froide (32a) et un élément de conduite (34,30,38) pour l'eau chaude (30a);
   - une source de courant électrique constituée d'un dispositif Peltier (60), qui est disposé entre ces éléments de conduites et dont un côté est thermiquement couplé à l'élément de conduite (34,30,38) pour l'eau chaude (30a) et l'autre côté à l'élément de conduite (36,32,40) pour l'eau froide (32a), et
   - un ensemble de soupapes (46,48), monté à la suite du dispositif Peltier (60) dans le sens d'écoulement, pour commander le flux d'eau traversant l'appareil de robinetterie;
   
   les sections d'écoulement des éléments de conduites (36,32,40; 34,30,38) étant nettement plus grandes dans la région du dispositif Peltier (60) que dans les autres régions,
**caractérisé** en ce que les éléments de conduites (36,32,40; 34,30,38) sont constitués par deux groupes constructifs distincts, séparés l'un de l'autre au moins jusqu'à l'ensemble de soupapes (46,48), qui sont réalisés, dans la région du dispositif Peltier (60), sous forme d'éléments de transmission de chaleur (32;30) embrassant en sandwich ce dispositif.

2. Appareil de robinetterie selon la revendication 1, caractérisé en ce que les éléments de transmission de chaleur (30,32) sont parallèlépipédiques.

3. Appareil de robinetterie selon la revendication 1 ou 2, caractérisé en ce que l'élément de transmission de chaleur (30) traversé par l'eau chaude (30a) présente, afin d'augmenter la capacité d'accumulation de chaleur, une plus grande masse que l'élément de transmission de chaleur (32) traversé par l'eau froide (32a).

4. Appareil de robinetterie selon l'une des revendications 1 à 3, caractérisé en ce que l'unité de commande (68) de l'appareil de robinetterie présente un élément d'accumulation électrique, de préférence un accumulateur ou un condensateur, qui peut être chargé au moyen du dispositif Peltier (60).

5. Appareil de robinetterie selon l'une des revendications 1 à 4, caractérisé en ce qu'il s'agit d'un dispensateur d'eau (12) présentant des soupapes (46,48) à actionnement électrique pour l'eau chaude et l'eau froide (30a,32a).

6. Appareil de robinetterie selon la revendication 5, caractérisé en ce qu'est prévu un détecteur de proximité (70), relié à l'unité de commande (68).

Fig.1

Fig.2